# EUROPEAN PATENT SPECIFICATION

(11) **EP 2 945 492 B1**
(45) Date of publication and mention of the grant of the patent: **13.06.2018**
(21) Application number: 14702210.7
(22) Date of filing: 17.01.2014
(51) Int. Cl.: A23G 3/38, A23G 3/42

(54) **NON-CARIOGENIC JELLY CONFECTIONARY**
NICHTKARIOGENES GELEEKONFEKT
PRODUIT DE CONFISERIE DE GELÉE NON CARIOGÈNE

(30) Priority: 18.01.2013 EP 13151878
(43) Date of publication of application: 25.11.2015
(73) Proprietor: Südzucker AG, 68165 Mannheim (DE)
(72) Inventor: KUHN, Klaus, 83646 Bad Tölz (DE)
(74) Representative: Schrell, Andreas
(86) International application number: PCT/EP2014/050870
(87) International publication number: WO 2014/111501

(56) References cited:
- DE-U1-202005 015 102
- GB-A- 2 206 582
- US-A- 5 410 028
- US-A1- 2005 222 406
- US-A1- 2007 129 430

## Description

The present invention relates to jelly confectionary such as gummy bears, in particular to jelly confectionary, which is non-cariogenic, non-laxative, reduced-calorie, and has a low glycemic index.

Jelly confectionary is well known in the art. There is a large variety of shapes, colors and flavors for jelly confectionary, most well known being the gummy bears, but other shapes also include various fruits, other animals, worms, bottles, army men, hamburgers, etc. These types of confectionary are very popular among children and adults. Jelly confectionary can be characterized by having a rubbery texture and a gel-like elastic consistency. During the chewing, the jelly confectionary dissolves and the fragmented soft pieces give the typical mouthfeel. It is traditionally prepared from sucrose, water, organic acid such as citric acid, a gelling agent such as gelatin and starch, normally a bulking agent such as glucose syrup or dextrose, and optional other additives such as flavoring agents, food coloring agents etc. For the preparation of such jelly confectionary usually a hot syrup mass is prepared which is then poured into starch molds, followed by a drying period, after which the jelly confectionary is sifted out and then usually either oiled or dusted with sugar to prevent sticking.

Excess consumption of sucrose, however, can cause numerous health problems which include but are not limited to: dental caries, type II diabetes, obesity, cancer, heart disease, etc. The consumption of jelly confectionary thus faces growing concerns related to excess sucrose intake and there is a demand for healthier options without compromise of taste, texture, and mouthfeel. Sucrose substitutes like sugar alcohols, in particular maltitol, have been used by some manufacturers in an attempt at making healthier jelly confectionary that is typically less cariogenic and has low glycemic properties compared to the traditionally prepared sucrose containing jelly confectionary. Although this is an option for a health-mindful consumer, such confectionary is not suitable for larger consumption due to the laxative effects of sugar alcohols/polyols. Furthermore, children, who are the main consumers of jelly confectionary, are much more sensitive to sugar alcohols and are more likely to suffer from its side-effects.

To solve this problem other sucrose substitutes have been explored. For example, isomaltulose, which is non-cariogenic and does not have the side-effects of sugar alcohols, has been implemented for the use in jelly confectionary and hard candy recipes.

DE 20 2005 015 102 U1 discloses a jelly type confectionary that is low in calories and contains 5 to 25%, preferably 8 to 18% of isomaltulose. In the examples of this document jelly confectionary is disclosed that contains 10% isomaltulose and 12% fructose. Although low in calories, this jelly confectionary is cariogenic since it includes fructose. Furthermore, the jelly confectionary of DE 20 2005 015 102 U1 does not have the characteristic consistency and mouthfeel of the traditional sucrose-containing jelly confectionary, and because of its low viscosity it tends to lose its shape upon touch.

WO 2012/092255 A1 discloses a hard candy recipe using isomaltulose as a sweetening agent. However, hard candies have a completely different texture from jelly confectionary, they are hard and glass-like, and do not have the characteristic gel-like elastic consistency of jelly confectionary.

US 5,410,028 discloses a test agent composition for dentistry comprising 5 to 45 wt.-% hydrogenated maltose syrup, 5 to 30 wt.-% sorbitol, 10 to 40 wt.-% palatinose (isomaltulose), 5 to 20 wt.-% water, 5 to 37 wt.-% of a component selected from the group consisting of gelatin, starch and pectin and 0.1 to 10 wt.-% of a detection reagent. To avoid crystallization and thus hardening of the resulting product at least 5 wt.-% of each hydrogenated maltose syrup and sorbitol have to be present. Further, the amount of palatinose cannot be higher than 40 wt.-% in order for the product not to crystallize.

GB 2 206 582 A discloses that it is impossible to produce a hard jelly containing palatinose in the required high concentration because of its strong tendency to crystallize. To overcome said problem a palatinose condensation product is disclosed and used to produce a palatinose condensation product containing hard jelly.

Therefore, there is a need for jelly confectionary, which is non-cariogenic, non-laxative, reduced-calorie, and has a low glycemic index, while at the same time possessing a consumer acceptable texture, taste, mouthfeel and storage stability that is comparable to that of the traditional sucrose-containing jelly confectionary.
The present inventor considered that problems of prior art jelly confectionary, in particular the above mentioned problems of prior art jelly confectionary, can be solved by a jelly confectionary that contains a high amount of a sugar that is selected from isomaltulose, trehalose or mixtures thereof.
Thus, the present invention provides jelly confectionary comprising:
(a) a sugar selected from isomaltulose, trehalose and combinations thereof,
(b) at least one gelling agent and
(c) water,
wherein the content of component (a) in the jelly confectionary is within the range of 30 to 50 wt.% based on the total weight of the jelly confectionary. The jelly confectionary contains no sugar alcohols or polyols. Thus, in a preferred embodiment of the present invention the jelly confectionary according to the present invention is non-cariogenic.
Isomaltulose is a white crystalline carbohydrate derived from sucrose and occurs naturally in sugarcane juice and honey. It has a sweetening power of about 50% that of sucrose, natural sucrose-like taste, and no undesirable after-taste. Commercially it is produced by enzymatic rearrangement of the glycosidic linkage between glucose and fructose from an α-1,2 linkage of sucrose to an α-1,6 linkage of isomaltulose. This new glycosidic linkage is more stable to hydrolysis, hence isomaltulose is not broken down and fermented in the mouth, making it tooth friendly and non-cariogenic. Isomaltulose has been used in health drinks, energy drinks, powdered drinks, powdered formula milk for children and artificial sugars for diabetic patients. Like sucrose it is fully absorbed, and offers the full caloric value of 4 kcal/g. However, isomaltulose is much slower absorbed in the small intestine, which in effect does not drastically increase blood sugar levels, consequently giving a much lower glycemic response. In contrast to quickly absorbed carbohydrates, isomaltulose facilitates a higher level of fat oxidation during physical activity, making it also suitable for functional and sport products. Isomaltulose is a sucrose replacement source that is non-cariogenic, non-laxative and gives a low glycemic response.

Trehalose is a naturally occurring disaccharide composed of two glucose molecules bound by a α,α-1,1-linkage and can be found in many organisms, including bacteria, fungi, insects, plants, and invertebrates. Commercially it is produced from starch by a proprietary enzymatic process developed by the Hayashibara Company in Japan. It has a sweetening power of about 45% that of sucrose, a clean taste profile and no aftertaste. Trehalose is used in bakery goods, beverages, fruit jam, breakfast cereals, rice, and noodles, as a texturizer, stabilizer, humectant, or formulation aid. While having a full caloric value of 4 kcal/g, trehalose produces a much lower insulin response compared to that of sucrose. Due to its unusual glycosidic bond, trehalose has high thermostability and a wide pH-stability range. Studies have also shown that trehalose might not only be lowly cariogenic but also anti-cariogenic. Trehalose is a favorable non-cariogenic, non-laxative, low-glycemic sucrose substitute.

It was found that regarding the preparation of jelly confectionary isomaltulose and trehalose have comparable properties and behave similarly in the production process.

Typical jelly confectionary contains about 33 to 42 wt.-% of carbohydrates, mostly sucrose. Using high concentrations, in particular such high concentrations, of isomaltulose or trehalose in the process for preparing jelly confectionary encounters considerable problems. Conventional processes cannot be used for preparing jelly confectionary with a high concentration of isomaltulose and/or trehalose, because the products obtained with these processes are crystalline and do not have the required texture and mouthfeel. The reason for this is the strong temperature dependence of the solubility in water of isomaltulose and trehalose, which is significantly higher than that of sucrose. Thus, recipes with low water content and high amount of isomaltulose or trehalose tend to crystallize spontaneously due to very high supersaturation at lower temperatures. This is the case for jelly confectionary as it is deposited and cooled down in forms. In result, the isomaltulose- or trehalose-containing jelly confectionary becomes hard and non-transparent within 24 hours, losing its desired texture and gumminess. For the purposes of this invention, thus also a new method for the preparation of the envisaged jelly confectionary with high isomaltulose or trehalose content had to be developed.

The present invention also provides a process for the preparation of jelly confectionary of the invention, comprising the following steps:
(i) mixing a sugar selected from isomaltulose, trehalose and combinations thereof, at least one gelling agent and water to form a composition;
(ii) bringing the composition of step (i) to a pouring temperature which is within the range of 80 to 90°C;
(iii) pouring the composition of step (ii) into a mold which is kept at a temperature within the range of 1 to 10°C during the pouring;
(iv) drying the composition in the mold for at least 2 weeks.
The provided jelly confectionary contains a sugar selected from isomaltulose, trehalose and combinations thereof in a range of 30 to 50 wt.-%, based on the total weight of the jelly confectionary.
The jelly confectionary of the present invention contains a sugar selected from isomaltulose, trehalose, or combinations thereof as component (a) in an amount within the range of 30 to 50 wt.% based on the total weight of the jelly confectionary. The inventors have found that at this particular concentration range jelly confectionary can be produced having the required characteristic gel-like consistency, texture, mouthfeel and taste that is comparable to the conventional sucrose-containing jelly confectionary. Preferably, the jelly confectionary of the present invention contains isomaltulose, trehalose or a combination thereof within a range of 32 to 52 wt.%, and more preferably within a range of 30 to 50 wt.-%, preferably within a range of 36 to 42 wt.%, preferably within a range of 38 to 50 wt.-%, more preferably 40 to 48 wt.-%, most preferred within a range of 41 to 50 wt.-%, based on the total weight of the jelly confectionary.
Preferably, the jelly confectionary of the invention contains either isomaltulose or trehalose, most preferably isomaltulose and no trehalose. Thus, the present invention in particular relates to jelly confectionary, wherein component a) is isomaltulose. If mixtures of isomaltulose and trehalose are used, the relative amounts of isomaltulose and trehalose in those mixtures are not particularly restricted.
Component (b) of the jelly confectionary of the present invention is at least one gelling agent. Gelling agents for use in jelly confectionary are well-known in the art and they provide the gel-like structure of the jelly confectionary. When mixed with water, gelling agents form a semi-solid colloid gel, and in jelly confectionary the gelling agent is important for obtaining the desired texture and mouthfeel of the confectionary.

Gelling agents that are used in the prior art jelly confectionary can also be used in the present invention. Typical gelling agents for use in the present invention are gum arabic, starch, gelatin, agar and pectin and mixtures thereof. Since one advantage of the jelly confectionary of the present invention is that it can be produced as non-cariogenic jelly confectionary, preferably the gelling agents that are used for the jelly confectionary of the present invention are non-cariogenic. Thus, preferably non-cariogenic gelling agents are used. Such non-cariogenic gelling agents which are preferably used in the jelly confectionary of the present invention are gum arabic, gelatin, agar, pectin and mixtures thereof. The most preferred gelling agent of the present invention is gelatin.

The concentration of the gelling agent that can be used in the jelly confectionary of the present invention is essentially the same as that used in prior art sucrose-containing jelly confectionary. Suitable concentrations of gelling agent that can be present in the jelly confectionary of the present invention can be seen from the following table:

| | |
|---|---|
| gum arabic | 35 to 45% |
| starch | 9 to 12% |
| gelatin | 5 to 12.5% |
| agar | 1 to 1.5% |
| pectin | 1 to 1.5%. |

The percentages mentioned above are by weight and are based on the total weight of the jelly confectionary. In general, all percentages, parts, etc. used in the present specification are by weight, if nothing else is explicitly stated or obvious under the circumstances. Gelling agents for use in jelly confectionary together with manufacturing details that are advantageous when using those gelling agents are disclosed e.g. in Hoffmann, Mauch, Untze: Zucker und Zuckerwaren, Behr Verlag 2002, second edition, which is included herein by reference regarding gelling agents and other additives for use in jelly confectionary and usual processes for the preparation of jelly confectionary and jelly confectionary as such.

Most preferred according to the present invention is a jelly confectionary containing gelatin as a gelling agent in an amount of 5 to 12.5%, more preferably of 6 to 10%, most preferably of about 8% by weight, based on the total weight of the jelly confectionary.

Preferably, the jelly confectionary of the present invention contains at least one bulking agent. Similar to the gelling agents, bulking agents are known in the prior art, and they are used to give bulk and volume and moreover the specific texture to the jelly confectionary without negatively affecting the taste thereof. In principle, any bulking agents that are used for conventional sucrose-based jelly confectionary can also be used in the present invention. Preferably the bulking agent is non-cariogenic and non-laxative. A preferred bulking agent of the present invention is a polysaccharide or a mixture of different polysaccharides (if more than one bulking agent is present). The most preferred bulking agent of the present invention is polydextrose, but other bulking agents such as indigestible dextrin (resistant starch) or inulin or mixtures thereof can also be used. It is preferred that the bulking agent is non-cariogenic and in the used concentrations is non-laxative. The terms "non-cariogenic" and "non-laxative" are known in the art and will be further explained below.

The amount of bulking agent that is used depends on the type and amount of the gelling agent and the other components of the jelly confectionary. If gum arabic is used as a gelling agent, this gelling agent is used in a high concentration, which means that no or only a very low amount of additional bulking agent is required. If agar or pectin is used as a gelling agent, those gelling agents are used only in very low concentrations, and thus, a high concentration of bulking agent(s) might be required to obtain a jelly confectionary with the required bulk and volume.

In the most preferred embodiment of the present invention where the gelling agent is gelatin, the most preferred bulking agent that is used in combination with gelatin is polydextrose. The bulking agent, in particular polydextrose, is present in the jelly confectionary in an amount of preferably 25 to 42.5 wt.%, more preferably of 30 to 38 wt.%, most preferred of 32 to 36 wt.%, in particular about 34 wt.% based on the total weight of the jelly confectionary.

The combination of gelling agent(s) and bulking agent(s) is present in an amount within the range of preferably 30 to 55 wt.%, more preferably 36 to 48 wt.%, and most preferably 40 to 44 wt.%, based on the total weight of the jelly confectionary.

Gelatin is known in the art, and it is a mixture of peptides and proteins produced by partial hydrolysis of collagen extracted from the skin, horns, hoofs, connective tissue and other parts of animals. When mixed with water, gelatin forms a semi-solid colloid gel which produces the desired texture and mouthfeel of jelly confectionary.

The type of gelatin that can be used in the present invention is not particularly restricted, the usual type of gelatin that is used for conventional sucrose-containing jelly confectionary can also be used in the present invention. A suitable gelatin is a gelatin with 200 to 280 Bloom measured using the well-known and established "Bloom test". (GME Monograph V4, 2005: Standardized Methods for the Testing of Edible Gelatine; Combination of : GMIA, Gelatine Manufacturing Institute of America, Standard Methods,1986; BSI, British Standard Institution, BS 757: 1975; AOAC, Ass. of Official Analytical Chemists, Methods of Analytics, 23.007).

Polydextrose is a randomly bonded condensation polymer of D-glucose, sorbitol, and citric acid. In food industry it is used as a bulking and texturizing agent. Because of its atypical linkages between glucose moieties, polydextrose resists digestion and is minimally absorbed in the small intestine and partially fermented in the large intestine. In this it is similar to many other poorly digested soluble fiber ingredients. Polydextrose is frequently utilized to increase the non-dietary fiber content of food, replace sugar, reduce calories and reduce fat content. It contains only 1 kcal/g and its fermentation leads to the increased growth of favorable microflora, diminished proportions of putrefactive microflora, enhanced production of short-chain fatty acids and suppressed production of carcinogenic metabolites (e.g. indole and p-cresol).

The invention is particularly advantageous because it allows preparing jelly confectionary which is non-cariogenic. Accordingly, in a particularly preferred embodiment of the present invention the jelly confectionary contains only components which are non-cariogenic, and the jelly confectionary itself is thus non-cariogenic.

"Non-cariogenic" is a well-defined and well-known term in the art. According to the definition used by the European Food Safety Authority, non-cariogenic products are those that do not promote dental caries because they do not lower plaque pH to the level associated with enamel demineralization (EFSA Journal 2011; 9(4): 2076, pages 1 to 26).

This definition by the European Food Safety Authority is also the definition used in the present specification, and it is explicitly referred to the above-referenced EFSA Journal.

It is also possible, but not preferred, to use gelling agents or bulking agents which have a low cariogenic effect, for example starch. If such agents are used in the jelly confectionary of the present invention, they are preferably used in a low amount of preferably not more than 20 wt.%, more preferably not more than 10 wt.%, and most preferably not more than 5 wt.% based on the total weight of the jelly confectionary. With a low amount of an ingredient having a low cariogenic effect, this type of jelly confectionary could probably also be proven as non-cariogenic.

Jelly confectionary contains water. It is used to dissolve or disperse all the ingredients of a jelly confectionary in order to create a pourable mixture which is then poured into molds to form the jelly confectionary. It is possible to evaporate some of the water that has been used to dissolve or to disperse the ingredients of the jelly confectionary in order to obtain an advantageous viscosity of the pouring composition. At the end of the production process, during a drying step, water is removed until a desired consistency and texture of the jelly confectionary are achieved.

Traditional sucrose containing jelly confectionary has a water content of 10 to 20 wt.%, usually of about 13 to 16 wt.% based on the total weight of the jelly confectionary. The amount of water in the final product of the jelly confectionary should be controlled, otherwise the consistency, mouthfeel, texture and elasticity are unfavorable. It has been found that when the jelly confectionary of the present invention contains the same amount of water as conventional sucrose-containing jelly confectionary, the preferred consistency, texture, and gel-like elasticity, of the traditional sucrose-containing jelly confectionary, can be achieved. Thus, the jelly confectionary of the present invention contains usually water in the range of 10 to 20 wt.%, preferably 14 to 18 wt.%, and more preferably 15 to 17 wt.% and most preferably about 15 wt.% or about 16 wt.% based on total weight of the jelly confectionary. The water content in the jelly confectionary and in all compositions of this invention is determined according to the well known method of Karl Fischer, e.g. at a temperature of 50 °C wherein the jelly confection or the composition is dissolved in a mixture of methanol and formamide.

Usually, compositions for preparing jelly confectionary also contain an organic acid in order to promote the gelatinization of the gelling agent and also to provide the jelly confectionary with its typical sour taste. Thus, the jelly confectionary of the present invention preferably also contains one or more organic acids, e.g. citric acid, malic acid or tartaric acid. The organic acid, when present in the jelly confectionary, is preferably citric acid and preferably is within the range of 1 to 3 wt.%, in particular 1.5 wt.%, based on the total weight of the jelly confectionary.
Furthermore, the jelly confectionary can also contain other optional ingredients, e. g. flavoring agents, color agents, stabilizers, preservatives, antioxidants, flavor enhancers, high-intensity sweeteners, thickeners, humectants, etc. These components are well known in the art and can be used in the present invention in the same way as in the conventional sucrose-containing jelly confectionary. Of course, the optional ingredients should be approved food additives. e.g. food additives approved by the EU.
In a preferred embodiment the jelly confectionary of the present invention comprises, preferably consists of:
(a) a sugar selected from isomaltulose, trehalose and mixtures thereof in an amount of 30 to 50 wt.-%,
(b) at least one gelling agent,
(c) water,
(d) optionally at least one bulking agent,
(e) optionally one or more further additives selected from organic acids, flavoring agents, humectants, coloring agents, stabilizers, preservatives, antioxidants, flavor enhancers, and high intensity sweeteners,
wherein the amount of water is in the range of 10 to 20 wt.-%, the amount of the at least one gelling agent and the optional bulking agent together is in the range of 30 to 55 wt.-%, and the amount of optional further additives (e) is in the range of 0 to 5 wt.-%. The jelly confectionary contains no sugar alcohols or polyols.

The jelly confectionary of the present invention preferably contains only the sugar of component (a) as defined above but not any sugar alcohols/polyols in addition to component (a). If an excess amount of sugar alcohols or polyols is consumed, laxative effects may occur. Thus, foods containing more than 10% added polyols must include the advisory statement "excessive consumption may produce laxative effects" (Commission Directive 94/54/EC). To avoid any laxative effects that might be associated with sugar alcohols/polyols, the jelly confectionary of the present invention does not include them, in particular the jelly confectionary does not contain sorbitol, maltitol or both.
Postprandial glycemia is defined as the elevation of blood glucose concentrations after consumption of a food and/or meal. This function is a normal physiological response which varies in magnitude and duration, and which may be influenced by the chemical and physical nature of the food or meal consumed, as well as by individual factors. Reducing post-prandial glycemic responses may be beneficial to subjects with, for example, impaired glucose tolerance, as long as post-prandial insulinaemic responses are not disproportionally increased. Impaired glucose tolerance is common in the general population of adults. Low-glycemic properties of a sugar decrease post-prandial blood glucose or insulinaemic response compared with glucose.
The jelly confectionary of the present invention preferably contains only isomaltulose, trehalose and combinations thereof as sugars.
In a preferred embodiment, the jelly confectionary contains no added sugar, except isomaltulose and/or trehalose, and therefore has advantageous low-glycemic properties.
In a furthermore preferred embodiment, the jelly confectionary according to the present invention is free of any added high-glycemic carbohydrates, in particular it is free of added sucrose, added glucose, added fructose or a combination thereof.

In a preferred embodiment, the jelly confectionary contains no sugar except isomaltulose and/or trehalose and therefore has advantageous low-glycemic properties. Thus, in particular, the jelly confectionary according to the present invention is preferably free of any high-glycemic carbohydrates, in particular it is free of sucrose, glucose, fructose or a combination thereof.

The preferred jelly confectionary of the present invention is thus non-cariogenic, non-laxative and low-glycemic and reduced in calorie. Nevertheless, it has the texture and consistency comparable to the commercial sucrose-containing jelly confectionary, in particular concerning firmness, springiness, cohesiveness, fragmentation, stickiness, rate of dissolution, and moisture of the mass.

Furthermore, the jelly confectionary of the present invention has an expectable shelf-life similar to the commercial sucrose-containing jelly confectionary. The shelf-life of the jelly confectionary of the present invention is preferably 6 months, more preferably at least one year. During the shelf-life, the jelly confectionary of the present invention will not show any significant crystallization or physicochemical changes.

The jelly confectionary of the present invention can be in all forms that are known in the art. Particularly preferred is the form of gummy bears, but for example a fruit form is also preferred. The size of the jelly confectionary of the invention is the same size as for the known commercial jelly confectionary, e.g. gummy bears. The volume of a single piece of jelly confectionary of the present invention is preferably within a range of 1.2 cm³ to 3.6 cm³, more preferably in a range of 1.5 to 1.8 cm³.

For preparing the jelly confectionary of the present invention in principle the known processes for preparing jelly confectionary can be used (e.g. as disclosed in Hoffmann, Mauch, Untze, Behr Verlag 2002 as indicated above), however, some process parameters of these processes have to be adapted in order to obtain a satisfactory jelly confectionary of the invention. Thus, except for the specific process conditions discussed herein, known standard process conditions can be used. The development of some specified process conditions for the preparation of jelly confectionary became necessary because of some specific properties of isomaltulose and trehalose. The following is explained for isomaltulose but is equally applicable for trehalose.

Isomaltulose has a strong temperature dependence of its solubility in water. Solubility, i. e. grams of sugar in 100 grams water, of isomaltulose at around 100°C is about 80%, which is analogous to sucrose. However, one can see a drastic difference in solubility of the two sugars at lower temperatures. For example, at 20°C the solubility of sucrose is 67%, in contrast however, the solubility of isomaltulose is only 29%. While saturated solutions of isomaltulose at high temperatures can be made with no difficulty, once that solution is cooled, the solution becomes highly supersaturated, and it is very difficult to control and avoid crystallization of the said supersaturated solution. In addition, it is important to realize, that the tendency to crystallize is also supported by the fact that isomaltulose has one hydrate-water per mol crystallized molecule.

If one defines "supersaturation" of a carbohydrate as carbohydrate in continuous phase in percent/maximum solubility of the carbohydrate in percent, then in a typical jelly confectionary recipe, containing 41.1% of sugar, 33.9% of syrup, 16.0% of water, 8.7% of gelatin and 0.3% of citric acid, the supersaturation at 20°C is 1.3, if the sugar is sucrose, and the supersaturation at 20°C is 6.5, if the sugar is isomaltulose. In the above recipe the syrup is the bulking agent.

Thus, recipes with high amounts of isomaltulose tend to crystallize upon cooling. The crystallization occurs when the jelly confectionary are deposited and cooled down in the molds. This problem was solved in the present invention by adjusting the temperature of the molds into which the jelly confectionary composition is poured for cooling and drying, by adjusting the temperature of the composition before it is poured into the molds and by modifying the drying method of the composition that has been poured into the molds.

The jelly confectionary of the present invention thus preferably does not contain any crystals that are visible or detectable upon consumption (mouthfeel).

In case isomaltulose starts to crystallize it crystallizes throughout the whole jelly confectionary which in turn becomes hard and non-transparent. Thus, measuring the turbidity can be used to determine the degree of crystallinity. An increase in turbidity characterizes an increase in crystallinity. Preferably, according to the present invention, turbidity of the jelly confectionary is measured using an adapted procedure from DIN EN 27027. Thus, turbidity is measured at a frequency of 578 nm by recording the extinction of the light through slices of the jelly confectionary. The calibration was done with formazide-standards from 0.1 to 7500 NTU. The resulting turbidity is expressed in NTU (nephelometric turbidity units). The jelly samples were put between microscopic slices with a fixed distance of 2 mm and the extinction values were recorded.The jelly samples were put between microscopic slides with a fixed distance of 2 mm and the extinction was recorded.
Values of 100 to 200 NTU, preferably 120 to 180 NTU, as obtained with commercial non-coloured sucrose-based jelly confectionary are considered to represent jelly confectionary without any crystals. In contrast, crystallized jelly confectionary easily reaches values greater than 4000 NTU.

The present jelly confectionary has preferably a turbidity of 100 to 250 NTU, preferably 100 to 200 NTU, preferably 150 to 250 NTU, preferably 120 to 180 NTU and more preferably 160 to 230 NTU, preferably immediately after drying. Due to the yellowish colour isomaltulose-based jelly according to the present invention may show a slightly higher NTU value compared to the commercial sucrose-based non-coloured jelly products but still remain in the above identified range below 250 NTU. Preferably, the present jelly confectionary continues to have a low or even absent crystallinity over a period of at least 1 week, preferably at least 2 weeks, preferably at least 4 weeks and preferably at least 6 weeks after drying. Preferably, thus, the above identified NTU values characterize also the present jelly confectionary after at least 1, 2, 4 and preferably 6 weeks of storage. In a preferred embodiment the present jelly confectionaries maintain their low or even absent crystallinity with NTU values from between 100 to 250, preferably 100 to 200 NTU, preferably 150 to 250, preferably 120 to 180 NTU, preferably 160 to 230 for at least 1 week, preferably at least 2 weeks, preferably at least 4 weeks and preferably at least 6 weeks, in particular without increase of the NTU values of more than 50 NTU.

During the conventional methods of preparing sucrose containing jelly confectionary, the pouring temperature of the pourable mixture, i.e. the composition of the jelly confectionary before it is poured into the molds, is usually in the range of 70 to 78°C with a preferable water content of about 20 to 22 wt.-% based on the total weight of the pourable mixture. These conditions provide optimal viscosity for pouring of these standard jelly confectionary compositions. The prepared pourable mixture is then poured e.g. into pre-dried starch molds, which have a water content of about 5 to 8 wt.% (water activity of 0.35 to 0.45 at 35°C), based on the weight of the starch. The starch molds are usually also warmed to about 30 °C, further accelerating water diffusion into the starch and thus facilitating drying. The mixture is then dried in the mold for about 1 to 2 days at about 35°C.

As discussed above, these conditions do not work for the jelly confectionary containing a high amount of isomaltulose, due to crystallization problems. Surprisingly, the inventors have found that a stable supersaturation of isomaltulose in jelly confectionary can be achieved in a process, wherein a pourable jelly confectionary composition having a temperature in the range of 80 to 90°C is poured into cold molds having a temperature in the range of 1 to 10°C. The temperature of the molols is controlled during the pouring step and preferably also during the drying step.

This preferably leads to a rapid cooling-down of the poured jelly confectionary composition. Preferably, the poured jelly confectionary composition reaches a temperature of 30 to 40 °C, preferably of 32 to 38 °C, in particular 35 °C within 8 to 16 minutes, preferably within 10 to 14 minutes, in particular within 12 minutes after pouring into the molds. Furthermore, the poured jelly confectionary reaches a temperature of 5 to 15 °C, preferably of 7 to 12 °C, in particular around 10 °C within 70 to 90 minutes, preferably within 75 to 85 minutes, in particular within around 80 minutes after pouring into the molds.

Several variables were considered by the present inventor. For the process of the present invention it was found to be advantageous to have a high viscosity of the composition that is poured into the molds, which is facilitated for example by the high pouring temperature and the very rapid cooling-down of the jelly confectionary composition within the cooled molds as mentioned above. In a high viscosity composition, nucleation is less likely to occur, which is important to avoid crystallization when working with high concentrations of isomaltulose. Furthermore, the viscosity should be controlled in a range that facilitates the pouring of the composition into the molds.

According to the invention, it was found that the temperature of the composition to be poured into the molds must be controlled within the range of 80°C to 90°C in order to ensure a composition that has a sufficiently high viscosity to avoid nucleation despite a high concentration of isomaltulose, to facilitate pouring the composition into the molds and to allow a sufficiently low water content in the composition to facilitate the slow drying process that is required by the present invention.

There are different possibilities to characterize the viscosity of the composition to be poured into the molds at the pouring temperature of 80°C to 90°C. One characterization can be by measuring G' and G" in Pa. For measurements made in the present invention, a Bohlin Gemini 150 measuring system was used that is available from Malvern instruments. The measurements were made with a 25 mm cylinder system with beaker (ISO 3219/DIN53019) using oscillation measuring conditions according to ASTM D4473 with 1% deformation and a frequency of 1 Hz. With those measuring conditions G' of the pouring mixture at the pouring temperature in the range of 80°C to 90°C is preferably in the range of 0.15 to 0.50 Pa, preferably of 0.2 to 0.35 Pa and G" is preferably in the range of 10 to 13 Pa, preferably 12 to 13 Pa. A suitable ratio of G'/G" is e.g. 0.33/13 or 0.24/12.

Alternatively, the viscosity of the pouring mixture can also be derived from measurements of the degree Brix with a Refractrometer. Characterized by °Brix, the pouring mixture of the present invention at the pouring temperature in the range of 80°C to 90°C is preferably at least 80°Brix, in particular within the range of 80to 85° Brix, e.g. about 82°Brix. In contrast, pouring mixtures of conventional sucrose-based jelly confectionary is below 80°Brix.

Furthermore, it is important to decrease the temperature of the mold so that the viscosity of the composition after it has been poured into the mold is increased rapidly. Finally, it is important that the mixture in the mold is dried very slowly.

It was found that the usual drying of jelly confectionary which is done within 1 or 2 days in the art is too fast for the jelly confectionary of the present invention. It is believed that the fast drying of the jelly confectionary in the art leads to a situation where a gradient in the water concentration within the jelly confectionary is created, which means that there is a core part of the jelly confectionary still having a rather high water content and a shell part having a low water content. This is obviously not problematic with the conventional sucrose-containing jelly confectionary but leads to unsatisfactory products with the jelly confectionary of the present invention, in particular to products that are partially crystalline.

Drying the jelly confectionary very slowly according to the present invention avoids this difference in the water content within the jelly confectionary and thus leads to satisfactory end products.

Starch molds are used very often in the prior art for the preparation of jelly confectionary. A typical pouring composition of the prior art has a pouring temperature of 75°C and is then typically poured into starch molds for drying. The water then diffuses into the starch, leading to a decrease in the water content of the jelly confectionary. In the prior art, in order to facilitate the drying, usually pre-dried starch is employed, i.e. starch which has a lower water content than natural starch. Furthermore, in order to facilitate the migration of the water from the jelly confectionary into the starch mold, the drying is usually done at an elevated temperature of about 30°C or more, which bads to advantageous drying times of generally not more than 1 or 2 days.

According to the present invention, in a preferred embodiment, starch molds are used in the preparation process of the jelly confectionary which are similar to those used in the prior art processes. However, preferably according to the present invention, starch molds are used which are not pre-dried. As a consequence the water activity gradient between the starch and the freshly poured jelly confectionary composition will be low. At lower temperatures the diffusion of water is also slower. This assures only a slight difference in the water content of the shell and the core of the jelly confectionary.

The process of the present invention will now be described in more detail.

Preferably, 32 to 52 wt.-%, more preferably 36 to 42 wt.-%, most preferred 38 to 50 wt.-%, in particular 42 to 52 wt.-% of component (a) of the jelly confectionary, i.e. the sugar selected from isomaltulose, trehalose and combinations thereof, are used as educts in step (i) of the present process.

During the first step, i. e. step (i), of the process of the present invention, the components (a), (b) and (c) as defined above, are mixed together, if present, with further optional ingredients. The mixing is usually effected in several stages. In one preferred embodiment of the invention the sugar component (a) of the jelly confectionary of the present invention and optionally one or more of the bulking agents are mixed in water and then cooked to a high temperature of preferably at least 110°C, preferably at least 113 to 117°C, most preferred at least 117°C. The gelling agent is mixed with water separately at a lower temperature range of about 75 to 90°C, preferably 80°C. In a preferred embodiment, the gelling agent is mixed with water at a temperature range of 20 to 40°C and then heated up to 75 to 90°C, preferably 80°C. The mixture of suga and bulking agent is cooled down to 102 to 108°C, preferably 105°C or e.g. 98°C and the combined with the gelatin mixture. The resulting mixture usually already has the required pouring temperature of about 80 to 90°C, preferably of 82 to 88°C, most preferred of 85 °C. The composition is then poured into the mold.
The other optional components, in particular the organic acid but also the optional flavoring agents, color agents, stabilizers, preservatives, antioxidants, flavor enhancers, high-intensity sweeteners, thickeners or humectants etc. are preferably added to the composition immediately before it is brought to the pouring temperature of 80 to 90°C or shortly before the composition is poured into the molds. Some of the components might not be stable at high temperatures or might react with each other and/or with the other components of the jelly confectionary at high temperatures. For example, the organic acid at higher temperatures might start to hydrolyze gelatin, resulting in a reduced gelling effect. Therefore, reactive compounds like citric acid should be added shortly prior to the pouring step. Preferably, the contained organic acid, preferably citric acid, leads to a pH of the composition of 3 to 4, preferably 3.5. This is considerably lower than in conventional sucrose-based compositions, further supporting the prevention of crystallization.
For the purposes of this invention, the pouring temperature of step (ii) is in the range of 80 to 90°C, preferably in the range of 82 to 88°C, e.g about 85°C.
The composition that is to be poured into the molds has a water content which is preferably only slightly above the water content of the final product. This also advantageously prevents crystallization of the jelly confectionary by providing a sufficiently high viscosity and a low water activity gradient between the jelly confectionary composition and the starch molds. Thus, if the water content of the final product is within the range of 10 to 20 wt.%, the water content of the composition to be poured into the molds is preferably not more than 4 wt.%, more preferably not more than 2 wt.% higher than the water content that is intended for the jelly confectionary and thus within a range of 12 to 24 wt.%, preferably of 17 to 22 wt.-%, e.g. of 17 to 20 wt.-%, in particular 18 wt.-%, based on the weight of the pourable composition. With the most preferred water content of the jelly confectionary of the present invention which is in the range of from 15 to 17 wt.-%, in particular 16 wt.-%, the water content of the composition that is to be poured into the molds is thus preferably 17 to 19 wt.-% (based on the weight of that composition) and preferably 2 wt.-% higher than the water content of the final jelly confectionary.

The following table provides preferred concentration ranges of the composition to be poured into the molds at the pouring temperature:

| Component | preferred wt.-% | most preferred wt.-% |
|---|---|---|
| isomaltulose or trehalose | 32 to 52 | 36 to 42 |
| gelling agent (preferably gelatin) | 5 to 12.5 | 6 to 10 |
| bulking agent (preferably polydextrose) | 35 to 42.5 | 32 to 37 |
| water | 17 to 22 | 17 to 19 |
| organic acid | 0.5 to 2.5 | 1.2 to 1.8 |
| other optional components | 0.1 to 0.5 | 0.2 to 0.3 |

The pouring composition is poured into a mold which is kept within a temperature range of 1 to 10°C during the pouring. This is achieved by temperature control of the mold, i.e. the mold is cooled during the pouring step, preferably the mold is also cooled during drying. The temperature of the mold is preferably within the range of 3 to 7°C, more preferably 4 to 6°C, in particular 5°C.

After the pourable composition is poured into the cooled mold, it is then dried until the desired water content of the jelly confectionary is achieved. According to the invention it was found that it is very important that the drying is done very slowly. The drying time of the jelly confectionary in the mold is thus at least 2 weeks, preferably 2 to 8 weeks, more preferably 20 days to 6 weeks, e.g. 3 to 6 weeks. Particularly preferred, the jelly confectionary is dried in the molds for 4 to 8 weeks, preferably 4 to 6 weeks in particular 4 weeks at a temperature of 2 to 8°C, preferably 5°C. Thus, preferably, the jelly confectionary composition reaches its final water content of 15 to 17 wt.-%, in particular 16 wt.-% during this drying time.
Preferably, the drying of the jelly confectionary in the mold is carried out at a reduced temperature, e.g. at the same temperature which is used for the mold during the pouring of the pouring composition. Thus, in a preferred embodiment of the present invention the drying of the composition in the mold to the jelly confectionary of the invention is carried out at a temperature in the range of 1 to 10°C, preferably 3 to 7°C, more preferably 4 to 6°C, in particular 5°C.

In a preferred embodiment, in the present invention starch molds are used during the preparation process for preparing the jelly confectionary of the present invention. However, contrary to the prior art processes, starch molds are used which contain no pre-dried starch, i.e. starch is used for the molds for use in the process of the present invention with a water activity within the range of 0.30 to 0.55, preferably of 0.40 to 0.50 at the drying temperature. It has been shown that the use of those starch molds leads to a very homogeneous drying of the jelly confectionary which is advantageous to avoid crystallization.

Starch molds are known in the art, and a technical term that is often used for such molds is a starch mogul tray. Accordingly, suitable molds for the preparation of jelly confectionary are commercially available under the designation of starch mogul tray from various commercial sources. For the preparation of a particularly preferred starch mogul tray that can be used in the process of the present invention starch with a rather high gelatinization temperature should be used, preferably maize starch, waxy maize starch or pea starch. As explained above, the water content and thus the water activity of the starch should not be reduced, the starch should not be dried, and the starch should be chosen to have the water activity as defined above. The starch is brought into a tray, and the desired molds are stamped into the starch. The mold form is that of usual jelly confectionary such as gummy bears, fruit shapes, etc. The tray with the starch is then cooled down to the required temperature in order to pour the jelly composition therein, and the temperature of the starch is held within the ranges as indicated above.

In the process of the present invention water is used to prepare the mixture of the sugar selected from isomaltulose, trehalose and combinations thereof, at least one gelling agent, optional bulking agent and optional further ingredients of the pourable composition. The amount of water used in those preparation steps will be selected by a skilled person in order to obtain a final water concentration of the pourable composition as defined above. In a preferred embodiment of the present invention, in which the mixing of the components of the jelly confectionary is effected in several steps, the amount of water that is used to prepare the mixture of the sugar selected from isomaltulose, trehalose and combinations thereof, i. e. component a), and optionally at least one bulking agent is within the range of 18% to 25%, preferably of 20% to 22% with respect to this mixture of a) plus optionally at least one bulking agent and water, and the amount of water that is used to prepare the aqueous mixture of the gelling agent is within the range of 60% to 80%, preferably of 65% to 70% with respect to the mixture of the one or more gelling agent and water. The amount of water used for preparing the mixture of step (i) of the process of the present invention is not decisive, however, too much excess water should be avoided, since it has to be evaporated to the required water content and the preferred viscosity of the pourable composition as indicated above, which then leads to the desired water content of the jelly confectionary of the present invention after drying. Excessively long cooking and evaporating times result in the decomposition of isomaltulose accompanied with a slight browning effect and a weak bitter off-taste.

After the drying process, the jelly confectionary is separated from the starch ("destarching") and can then be further processed as is known in the field for the production of conventional jelly confectionary. For example, it can be advantageous, if the jelly confectionary is kept for some time, e.g. 2 days, at room temperature in a closed box in order to equilibrate the remaining water gradients.

If desired, the surface of the jelly confectionary can also be made smooth and shiny, e.g. by adding a wax or oil. It is, of course, also possible to "sand" the jelly confectionary in sugar and/or acid powder or starch powder or to give it a sugar coating, however, those jelly confectionary would then only have the desired non-cariogenic properties if suitable ingredients are being used, and therefore, ingredients with cariogenic potential are not preferred. Preferably, the jelly confectionary is not coated or "sanded" at all, or if a coating or "sanding" agent is used, this agent should be non-cariogenic.

A preferred embodiment of the process of the present invention for the preparation of jelly confectionary comprises the following steps:
- heating a mixture of isomaltulose and/or trehalose, polydextrose, and water to a temperature within the range of 100 to 120°C in order to produce a first mixture;
- heating a mixture of gelatin and water to a temperature within the range of 75 to 85°C in order to prepare the second mixture;
- mixing the first and the second mixture at a temperature within the range of 85 to 100°C;
- adding additional components to the mixture;
- bringing the temperature of the mixture to the pouring temperature at 80 to 90°C;
- pouring the mixture into a mold.

In a further preferred embodiment of the process of the present invention for the preparation of jelly confectionary the process comprises the following steps:
1. stirring isomaltulose and/or trehalose and polydextrose into water and heating up the mixture to 110 to 115°C, within 7 minutes;
2. continuing to heat up the mixture described in step 1 to 117°C, within 2 minutes;
3. letting the solution described in step 2 cool down within the range of 102 to 108°C, preferably 105°C;
4. stirring gelatin into water of 20 to 40°C, and letting it swell for at least 30 minutes;
5. heating the solution described in step 4 within the range of 75 to 90°C, preferably 80°C to dissolve gelatin homogenously;
6. stirring the solution prepared in step 5 into the solution prepared in step 3;
7. letting the mixture prepared in step 6 cool down within the range of 90 to 95°C, preferably 93°C, within 2 minutes;
8. adding citric acid solution, wherein the citric acid solution is a 1:1 citric acid to water solution, to the mixture prepared in step 7;
9. cooling the mixture prepared in step 7 to a temperature within the range of 85 to 90°C, preferably 87°C, most preferred 85°C;
10. pouring the cooled mixture from step 9 into a mold, preferably into a cooled mold, in particular into a mold having a temperature of 2 to 10°C, preferably 5°C.

In a further preferred embodiment of the process of the present invention for the preparation of jelly confectionary the mixture, i.e. the composition, to be poured into the mold can be characterized by one or more of the following parameters:
- 80 to 85°Brix, and more preferably 82°Brix;
- the pH is within the range of 2 to 5, preferably 3.5;
- the water content is within the range of 17 to 19 wt.%, more preferably 18 wt.%;
- the water activity of the pourable composition is within the range of 0.65 to 0.70 preferably 0.68.

All process steps described herein are carried out under atmospheric pressure, if nothing else is stated.

Further preferred embodiments are subject of the dependent claims.

The following examples further explain the invention.

### Example 1

200 grams of isomaltulose with DS of 95% and 195 grams polydextrose with DS of 97.7% were combined with 82 grams of water and were heated to 113°C within 7 minutes under stirring. Water was then evaporated at a temperature of 117°C within 2 minutes. While stirring the mixture metal tools should not be used, and strong shear forces should be avoided. The isomaltulose and polydextrose solution is then cooled to a temperature of 105°C within 5 minutes. Parallel thereto, 50grams of gelatin (260 Bloom) were stirred into 100 grams water at a temperature of 30°C. The gelatin solution is then allowed to swell for 30 minutes, followed by heating to 80°C to achieve a fully dissolved homogeneous mixture. The two prepared solutions described above are then combined and allowed to cool to a temperature of 93°C, within 2 minutes. The temperature is allowed to further decrease to 85°C by adding 15 grams of a 1:1 citricacid to water solution to the combined mixture (isomaltulose, polydextrose, gelatin and water). The pouring composition had the following parameters:

| | |
|---|---|
| pH: | 3.5 |
| °Brix: | 82 |
| Water content: | 18% |
| Water activity: | 0.684 |
| Viscosity G'/G" (Pa) (measured as indicated above): | 0.33/13.0. |

The combined mixture is poured at the pouring temperature of 85°C into cooled to 5°C starch molds. The already poured into the mold mixture is then stored at a constant temperature of 5°C for 20 days.

The jelly confectionary was sifted out but not treated with any coating or dusting.

The following parameters were measured during the drying process:

| | |
|---|---|
| Mogul starch water activity: | 0.45 |
| Cooling time of the mass until 35°C is reached: | 12minutes |
| Cooling time of the mass until 10°C is reached: | 80minutes |
| Product water content: | 16% |
| Product water activity: | 0.643. |

The jelly confectionary produced had the shape of usual gummy bears with a volume of about 1.5 cm³ for each gummy bear.

### Example 2

Example 1 was repeated, except that instead of 200 grams of isomaltulose 210 grams of trehalose were used.

The relevant process conditions and parameters for characterizing the pouring mixture, drying conditions, etc. can be seen in the following table:

| | |
|---|---|
| pH: | 3.5 |
| °Brix: | 82 |
| Water content: | 18% |
| Water activity: | 0.69 |
| | |
| Viscosity G'/G" (Pa) (measured as indicated above): | 0.28/11.0. |
| Mogul starch water activity: | 0.45 |
| Cooling time of the mass until 35°C is reached: | 12minutes |
| Product water content: | 15.5% |
| Product water activity: | 0.62. |

### Example 3

A panel of 8 people (trained experts) was used to evaluate the texture attributes of the jelly confectionary of example 1 with respect to standard commercially available gummy bears (brand name: Haribo "Goldbären"®). The attributes were adapted from Meilgaard et al.: Sensory evaluation techniques (2007), using a scale from 1 to 10. This is an accepted standard test of the art.

### 1. Visual observation

The jelly confectionary was clear, and no crystallization was observed in any part of the confectionary.

### 2. Evaluation of texture attributes

| Texture attribute | Commercial gummy bears | Product of example 1 |
|---|---|---|
| Firmness | 8 | 7 |
| Springiness | 7 | 8 |
| Cohesiveness | 5 | 7 |
| Fragmentation | 7 | 8 |
| Stickiness | 4 | 5 |
| Rate of dissolution | 5 | 4 |
| Moistness of mass | 7 | 6 |

The values of the jelly confectionary of example 1 correspond essentially to the values of the tested commercial sucrose-containing gummy bears. This means that the products are directly comparable, and the product of example 1 could be taken as substitute for the commercially available sucrose-containing gummy bears.

### Comparative example

Example 1 was repeated, but the usual process conditions for producing sucrose-containing jelly confectionary were used (pourable composition had a temperature of 75°C, the starch molds had a water activity at 35°C of 0.40, no cooling of the starch mold, drying at 35°C for 2 days). The resulting product was crystalline and hard and did not resemble jelly confectionary.

## Claims

1. Jelly confectionary comprising:
(a) a sugar selected from isomaltulose, trehalose and combinations thereof,
(b) at least one gelling agent and
(c) water,
wherein the content of component (a) in the jelly confectionary is within the range of 30 to 50 wt.-% based on the total weight of the jelly confectionary and wherein the jelly confectionary contains no sugar alcohols or polyols.

2. Jelly confectionary according to claim 1, wherein the content of component (a) is within the range of 38 to 42 wt.-% based on the total weight of the jelly confectionary.

3. Jelly confectionary according to any of the previous claims, wherein the water content of the jelly confectionary is within the range of 10 to 20 wt.-%, preferably 15 to 17 wt.-%, based on the total weight of the jelly confectionary.

4. Jelly confectionary according to any of the previous claims, further comprising a bulking agent, preferably selected from polydextrose, indigestible dextrin, inulin and mixtures thereof.

5. Jelly confectionary according to any of the previous claims, wherein the gelling agent is selected from gelatin, gum Arabic, agar, pectin and mixtures thereof.

6. Jelly confectionary according to any of the previous claims further comprising an organic acid, preferably citric acid.

7. Jelly confectionary according to any of the previous claims, wherein the jelly confectionary is non-cariogenic.

8. Jelly confectionary according to any of the previous claims, wherein the jelly confectionary additionally contains flavoring agent(s), color agent(s), stabilizer(s), high-intensity sweetener(s) or a combination of two or more of the above.

9. A process for the preparation of jelly confectionary as defined in any of claims 1 to 8 comprising the following steps:
(i) mixing a sugar selected from isomaltulose, trehalose and combinations thereof, at least one gelling agent and water to form a composition;
(ii) bringing the composition of step (i) to a pouring temperature which is within the range of 80 to 90°C;
(iii) pouring the composition of step (ii) into a mold which is kept at a temperature within the range of 1 to 10°C during the pouring;
(iv) drying the composition in the mold for at least 2 weeks.

10. Process according to claim 9, wherein the pouring temperature is in the range of 82 to 88°C.

11. Process according to any of claims 9 or 10, wherein the temperature of the mold is in the range of 4 to 6°C.

12. Process according to any of claims 9 to 11, wherein the drying step (iv) is carried out at a temperature within the range of 1 to 10°C.

13. Process according to any of claims 9 to 12, wherein the mold is a starch mold and the starch has a water activity within the range of 0.4 to 0.5 at the drying temperature.

14. Process according to any of claims 9 to 13 wherein in step (i) additionally at least one bulking agent is mixed with the sugar, the at least one gelling agent and the water.

15. Process for the preparation of jelly confectionary according to claim 14, wherein the sugar is isomaltulose, the gelling agent is gelatin and the bulking agent is polydextrose, comprising the following steps:
- heating a mixture of isomaltulose, polydextrose, and water to a temperature within the range of 100 to 120°C in order to prepare a first mixture;
- heating a mixture of gelatin and water to a temperature within the range of 75 to 85°C in order to prepare a second mixture;
- mixing the first and the second mixture at a temperature within the range of 85 to 100°C to form a composition;
- adding optional components to the composition,
- bringing the temperature of the composition to the pouring temperature as defined in any of claims 9 and 10 and
- pouring the composition into a mold while maintaining the temperature of the mold as defined in any of claims 9 and 11.

16. Jelly confectionary obtainable by a process as defined in any of claims 9 to 15.

## Patentansprüche

1. Geleekonfekt, umfassend:
(a) einen Zucker, der aus Isomaltulose, Trehalose und Kombinationen davon ausgewählt ist,
(b) zumindest ein Geliermittel und
(c) Wasser,
wobei der Gehalt an der Komponente (a) in dem Geleekonfekt innerhalb des Bereichs von 30 bis 50 Gew.-% bezogen auf das Gesamtgewicht des Geleekonfekts beträgt, und wobei das Geleekonfekt keine Zuckeralkohole oder Polyole enthält.

2. Geleekonfekt nach Anspruch 1, wobei der Gehalt an der Komponente (a) innerhalb des Bereichs von 38 bis 42 Gew.-% bezogen auf das Gesamtgewicht des Geleekonfekts liegt.

3. Geleekonfekt nach einem der vorhergehenden Ansprüche, wobei der Wassergehalt des Geleekonfekts innerhalb des Bereichs von 10 bis 20 Gew.-%, vorzugsweise 15 bis 17 Gew.-%, bezogen auf das Gesamtgewicht des Geleekonfekts beträgt.

4. Geleekonfekt nach einem der vorhergehenden Ansprüche, des Weiteren umfassend einen Füllstoff, vorzugsweise ausgewählt aus Polydextrose, unverdaulichem Dextrin, Inulin und Mischungen davon.

5. Geleekonfekt nach einem der vorhergehenden Ansprüche, wobei das Geliermittel ausgewählt ist aus Gelatine, Gummi arabicum, Agar, Pektin und Mischungen davon.

6. Geleekonfekt nach einem der vorhergehenden Ansprüche, des Weiteren umfassend eine organische Säure, vorzugsweise Zitronensäure.

7. Geleekonfekt nach einem der vorhergehenden Ansprüche, wobei das Geleekonfekt nicht kariogen ist.

8. Geleekonfekt nach einem der vorhergehenden Ansprüche, wobei das Geleekonfekt zusätzlich einen oder mehrere Geschmacksstoffe, Farbstoffe, Stabilisatoren, Hochintensiv-Süßstoffe oder eine Kombination von zwei oder mehreren derselben enthält.

9. Verfahren zur Herstellung von Geleekonfekt wie in einem der Ansprüche 1 bis 8 definiert, umfassend die folgenden Schritte:
(i) Mischen eines Zuckers, der aus Isomaltulose, Trehalose und Kombinationen davon ausgewählt ist, zumindest eines Geliermittels und Wasser, um eine Zusammensetzung zu bilden;
(ii) Bringen der Zusammensetzung von Schritt (i) auf eine Gießtemperatur, die innerhalb des Bereichs von 80 bis 90 °C liegt;
(iii) Gießen der Zusammensetzung von Schritt (ii) in eine Form, die während des Gießens auf einer Temperatur innerhalb des Bereichs von 1 bis 10 °C gehalten wird;
(iv) Trocknen der Zusammensetzung in der Form für zumindest 2 Wochen.

10. Verfahren nach Anspruch 9, wobei die Gießtemperatur in dem Bereich von 82 bis 88 °C liegt.

11. Verfahren nach einem der Ansprüche 9 oder 10, wobei die Temperatur der Form in dem Bereich von 4 bis 6 °C liegt.

12. Verfahren nach einem der Ansprüche 9 bis 11, wobei der Trocknungsschritt (iv) bei einer Temperatur innerhalb des Bereichs von 1 bis 10 °C ausgeführt wird.

13. Verfahren nach einem der Ansprüche 9 bis 12, wobei die Form eine Stärkeform ist und die Stärke bei der Trocknungstemperatur eine Wasseraktivität innerhalb des Bereichs von 0,4 bis 0,5 aufweist.

14. Verfahren nach einem der Ansprüche 9 bis 13, wobei in Schritt (i) zusätzlich zumindest ein Füllstoff mit dem Zucker, dem zumindest einen Geliermittel und dem Wasser gemischt wird.

15. Verfahren zur Herstellung von Geleekonfekt nach Anspruch 14, wobei der Zucker Isomaltulose ist, das Geliermittel Gelatine ist und der Füllstoff Polydextrose ist, wobei das Verfahren die folgenden Schritte umfasst:
- Erwärmen eines Gemischs aus Isomaltulose, Polydextrose und Wasser auf eine Temperatur innerhalb des Bereichs von 100 bis 120 °C, um ein erstes Gemisch herzustellen;
- Erwärmen eines Gemischs aus Gelatine und Wasser auf eine Temperatur innerhalb des Bereichs von 75 bis 85 °C, um ein zweites Gemisch herzustellen;
- Mischen des ersten und zweiten Gemischs bei einer Temperatur innerhalb des Bereichs von 85 bis 100 °C, um eine Zusammensetzung zu bilden;
- Hinzufügen zusätzlicher Komponenten zu der Zusammensetzung,
- Bringen der Temperatur der Zusammensetzung auf die Gießtemperatur, wie in einem der Ansprüche 9 und 10 definiert, und
- Gießen der Zusammensetzung in eine Form, während die Temperatur der Form wie in einem der Ansprüche 9 und 11 definiert gehalten wird.

16. Geleekonfekt erhaltbar nach einem Verfahren wie in einem der Ansprüche 9 bis 15 definiert.

## Revendications

1. Confiserie de gelée, comprenant :
(a) un sucre choisi parmi isomaltulose, tréhalose et les combinaisons de ceux-ci,
(b) au moins un agent gélifiant, et
(c) de l'eau,
dans laquelle la teneur en composant (a) dans la confiserie de gelée est dans la rangée de 30 à 50 % en poids par rapport au poids total de la confiserie de gelée, et dans lequel la confiserie de gelée ne contient pas d'alcools de sucre ou polyols.

2. Confiserie de gelée selon la revendication 1, dans laquelle la teneur en component (a) est dans la range de 38 à 42 % en poids par rapport au poids total de la confiserie de gelée.

3. Confiserie de gelée selon l'une quelconque des revendications précédentes, dans laquelle la teneur de la confiserie de gelée en eau est dans la rangée de 10 à 20 % en poids, de préférence de 15 à 17 % en poids, par rapport au poids total de la confiserie de gelée.

4. Confiserie de gelée selon l'une quelconque des revendications précédentes, en outre comprenant un agent de charge, de préférence choisi parmi le polydextrose, la dextrine indigeste, l'inuline et les mélanges de ceux-ci.

5. Confiserie de gelée selon l'une quelconque des revendications précédentes, dans laquelle l'agent gélifiant est choisi parmi la gélatine, la gomme arabique, l'agar, la pectine et les mélanges de ceux-ci.

6. Confiserie de gelée selon l'une quelconque des revendications précédentes, en outre comprenant un acide organique, de préférence l'acide citrique.

7. Confiserie de gelée selon l'une quelconque des revendications précédentes, dans laquelle la confiserie de gelée est non-cariogène.

8. Confiserie de gelée selon l'une quelconque des revendications précédentes, dans laquelle la confiserie de gelée en outre contient un ou plusieurs agents aromatisants, colorants, stabilisants, édulcorants à haute intensité ou une combinaison de deux ou plusieurs de ceux-ci.

9. Procédé de préparation d'une confiserie de gelée comme définie dans l'une quelconque des revendications 1 à 8, comprenant les étapes :
(i) mélanger un sucre choisi parmi isomaltulose, tréhalose et les combinaisons de ceux-ci, au moins un agent gélifiant et de l'eau pour former une composition ;
(ii) amener la composition de l'étape (i) à une température de coulée dans la rangée de 80 à 90 °C ;
(iii) couler la composition de l'étape (ii) dans une moule qui est maintenue à une température dans la rangée de 1 à 10 °C pendant la coulée ;
(iv) sécher la composition dans la moule pour au moins 2 semaines.

10. Procédé selon la revendication 9, dans laquelle la température de coulée est dans la rangée de 82 à 88 °C.

11. Procédé selon l'une quelconque des revendications 9 ou 10, dans lequel la température de la moule est dans la rangée de 4 à 6 °C.

12. Procédé selon l'une quelconque des revendications 9 à 11, dans lequel l'étape de séchage (iv) est effectuée à une température dans la rangée de 1 à 10 °C.

13. Procédé selon l'une quelconque des revendications 9 à 12, dans lequel la moule est une moule d'amidon, et l'amidon a une activité de l'eau dans la rangée de 0,4 à 0,5 à la température de séchage.

14. Procédé selon l'une quelconque des revendications 9 à 13, dans lequel dans l'étape (i) au moins un agent de charge est en outre mélangé avec le sucre, l'au moins un agent gélifiant et l'eau.

15. Procédé de préparation d'une confiserie de gelée selon la revendication 14, dans lequel le sucre est l'isomaltulose, l'agent gélifiant est la gélatine et l'agent de charge est le polydextrose, le procédé comprenant les étapes :
- chauffer un mélange de l'isomaltulose, le polydextrose, et de l'eau à une température dans la rangée de 100 à 120 °C pour préparer un premier mélange ;
- chauffer un mélange de gélatine et de l'eau à une température dans la rangée de 75 à 85 °C pour préparer un second mélange ;
- mélanger le premier et le second mélanges à une température dans la rangée de 85 à 100 °C pour obtenir une composition ;
- ajouter des composants additionnels à la composition,
- amener la température de la composition à la température de coulée comme définie dans l'une quelconque des revendications 9 et 10, et
- couler la composition dans une moule en maintenant la température de la moule comme définie dans l'une quelconque des revendications 9 et 11.

16. Confiserie de gelée qui peut être obtenue par un procédé comme défini dans l'une quelconque des revendications 9 à 15.
